# EUROPÄISCHE PATENTSCHRIFT

(11) **EP 3 360 702 B1**
(45) Veröffentlichungstag und Bekanntmachung des Hinweises auf die Patenterteilung: **25.09.2019**
(21) Anmeldenummer: 17207428.8
(22) Anmeldetag: 14.12.2017
(51) Int. Cl.: B60C 23/04, B60C 29/06

(54) **REIFENVENTIL FÜR EINEN LUFTREIFEN EINES FAHRZEUGS**
TYRE VALVE FOR A PNEUMATIC TYRE OF A VEHICLE
SOUPAPE DU PNEU POUR UN PNEUMATIQUE D'UN VÉHICULE

(30) Priorität: 08.02.2017 DE 102017102415
(43) Veröffentlichungstag der Anmeldung: 15.08.2018
(73) Patentinhaber: Huf Hülsbeck & Fürst GmbH & Co. KG, 42551 Velbert (DE)
(72) Erfinder: DEMENTYEV, Yevgen, 42287 Wuppertal (DE); GORENZWEIG, Igor, 42109 Wuppertal (DE); HELLER, Norbert, 47929 Grefrath (DE)

(56) Entgegenhaltungen:
- EP-A2- 1 277 601
- US-A- 1 370 474

## Beschreibung

Die Erfindung betrifft ein Reifendruckkontrollsystem für ein Fahrzeug zur Ermittlung reifenspezifischer Parameter, aufweisend:
einen an einer Felge eines Luftreifens des Fahrzeugs anbringbaren Reifendrucksensor,
ein Reifenventil, welches einen Ventilschaft mit einer längsverlaufenden Ventilbohrung aufweist, welche in einer, insbesondere kalottenförmigen, Stirnfläche eines Ventilfußes mündet,
ein Befestigungselement, welches den Reifendrucksensor und das Reifenventil an dessen Ventilfuß durch Eingreifen in die Ventilbohrung verbindet,
eine zur Fixierung des Reifenventils an der Felge vorgesehene und auf einen Gewindeabschnitt des Ventilschafts aufgeschraubte Überwurfmutter, und
eine Ventilkappe, die am Lufteinlassende auf dem Ventilschaft angeordnet ist.

Reifenventile der gattungsgemäßen Art werden verwendet, um Druckluft in den Luftreifen eines Kraftfahrzeugs zu pumpen oder auch um Druckluft aus dem Luftreifen abzulassen. Bezogen auf die Strömungsrichtung der Luft beim Aufpumpen des Luftreifens weisen dementsprechend solche Reifenventile ein Lufteinlassende zum Anschließen einer Druckluftquelle und ein Luftauslassende zum Positionieren innerhalb des Luftreifens auf. Der Anschluss der Druckluftquelle erfolgt in der Regel über ein Klemmelement einer Luftpumpe beziehungsweise eines Kompressors, das auf ein endseitiges Gewinde am Lufteinlassende eines Ventilschafts des Reifenventils aufgeklemmt wird.

US 1370 474 A offenbart ein Reifenventil umfassend eine Ventilkappe und eine Überwurfmutter zur Montage an einer Felge. Es wird vorgeschlagen die Ventilkappe an der Überwurfmutter mit einer lösbaren Verbindung zu versehen, um eine schnelle Montage zu ermöglichen.

Die spät veröffentlichte WO2016198373 A1 zeigt eine Überwurfmutter mit einem minimalen Innendurchmesser, der größer als der maximale Außendurchmesser der Ventilkappe ist.

In jüngerer Zeit wurde vorgeschlagen, am Luftauslassende des Reifenventils beziehungsweise des entsprechenden Ventilschafts des Reifenventils den Luftdrucksensor für ein Reifenluftdrucküberwachungssystem anzuschließen. Ein solcher Luftdrucksensor weist ein Gehäuse auf, das gemäß einer Ausführungsform, wie sie auch die vorliegende Erfindung betrifft, gelenkig am Ventilschaft befestigt beziehungsweise befestigbar ist, um das Gehäuse an das Felgenbett einer den Luftreifen aufnehmenden Felge zu drücken. Gemäß EP 1 277 601 A2 geschieht dies mittels einer als Hohlschraube ausgeführten Befestigungsschraube, die in eine Ventilbohrung des Ventilschafts eingreift und durch deren Anziehen das Gehäuse des Luftdrucksensors gegen das Felgenbett gedrückt wird.

Da eine solche Befestigungsschraube mit ihrem freien Ende im Inneren des Luftreifens positioniert ist beziehungsweise auf der dem Inneren des Luftreifens zugewandten Seite des Felgenbetts, wird gemäß EP 1 277 601 A2 vorgeschlagen, sowohl das Anziehen einer Überwurfmutter gegen die Felge als auch das Anziehen der Befestigungsschraube innerhalb einer Befestigungsbohrung gegen den Ventilschaft auf der dem Innenraum im Luftreifen abgewandten Seite des Felgenbetts zu ermöglichen. Gemäß der vorgeschlagenen Lösung weist die Überwurfmutter an ihrer Innenseite einen Vorsprung auf, der als Sollbruchelement ausgeführt ist, sodass bei einem anfänglichen Aufschraubmoment beim Aufschrauben der Überwurfmutter auf den Ventilschaft zunächst die Überwurfmutter zusammen mit dem Ventilschaft relativ zu der Befestigungsschraube verdreht wird. Infolgedessen wird die Befestigungsschraube in eine Gewindebohrung am Luftauslassende des Ventilschafts eingeschraubt, was ein Anlenken des Gehäuses an der Felge bewirkt und bei einem weiteren Aufschrauben der Überwurfmutter auf das Außengewinde des Ventilschafts mit einem entsprechend größeren Aufschraubmoment das Sollbruchelement abgeschert wird und die Überwurfmutter sich relativ zum Ventilschaft verdreht und dadurch gegen die Felge beziehungsweise die Außenseite des Felgenbetts angezogen wird, um die Felge zwischen der Überwurfmutter und einem am Luftauslassende des Ventilschafts vorgesehenen Anschlag zu verklemmen. Das Anordnen des Sollbruchelements innerhalb der Überwurfmutter hat sich nachteilig in der Fertigung erwiesen, da das Fertigungswerkzeug in den begrenzten Raum innerhalb der Überwurfmutter eingebracht werden muss. Auch bei einer Qualitätskontrolle gestalten sich die Messprozesse wegen des begrenzten Raums innerhalb der Überwurfmutter als sehr nachteilig. Ferner treten Nachteile bei einer nicht korrekt erfolgten Montage, da das Abscheren des Sollbruchelements nicht sofort sichtbar für einen Monteur.

Wenn der Montage nicht korrekt durchgeführt wurde, kann die Überwurfmutter nicht mehr wieder verwendet werden. Die aus Aluminium gefertigte Überwurfmutter bzw. das Ventil werden wegen des Einsatzes in feuchter Umgebung gegen Korrosion beschichtet. Nach der erfolgten Montage entsteht Korrosion auf der von der Beschichtung befreiten Stelle durch die Abscherung des Sollbruchelements.

WO 2014/108926 A1 schlägt ausgehend von der EP 1 277 601 A2 vor, das Sollbruchelement nicht an der Überwurfmutter sondern am Ventilschaft selbst vorzusehen, um dadurch Standardüberwurfmuttern verwenden zu können. Obwohl die genannten Ausführungsformen bereits gegenüber älteren Ausführungsformen, die einen Schraubenantrieb der Befestigungsschraube im Bereich des Luftauslassendes des Ventilschafts vorsehen, siehe beispielsweise EP 0 751 017 A2, in der Praxis eine deutlich leichtere Montage des Luftdrucksensors am Felgenbett ermöglichen, ist bei den genannten Ausführungsformen als nachteilig anzusehen, dass die Überwurfmutter aufgrund ihres Zusammenwirkens mit dem Sollbruchelement am Ventilschaft beziehungsweise aufgrund des radial nach innen von der Überwurfmutter vorstehenden Sollbruchelementes immer nur dann auf dem Ventilschaft montiert werden kann, wenn zuvor eine die Ventilbohrung am Lufteinlassende verschließende Ventilkappe entfernt wurde. Aufgrund des hohen Zeitdrucks und der Vielzahl von zu montierenden Luftdrucksensoren in Werkstätten hat sich das notwendige Entfernen und spätere Wiederaufschrauben der Ventilkappen in der Praxis als bedeutender Nachteil erwiesen. Wenn die Ventilkappen hingegen einem neuen Reifenventil nur lose beigelegt werden, um das Abschrauben zu vermeiden, besteht die Gefahr, dass die Ventilkappe beim Transport verloren geht. Darüber hinaus besteht die Gefahr der Verschmutzung der Füllöffnung in dem Ventil, wenn die Kappe beim Transport nur lose beigelegt ist.

Der vorliegenden Erfindung liegt die Aufgabe zugrunde, die Montage des Reifendruckkontrollsystems zu erleichtern und kostengünstiger zu gestalten.

Die erfindungsgemäße Aufgabe wird durch ein Reifendruckkontrollsystem mit den Merkmalen von Anspruch 1 gelöst. In den abhängigen Ansprüchen sind vorteilhafte und besonders zweckmäßige Ausgestaltungen der Erfindung angegeben.

Dabei weist die Ventilkappe einen Koppelabschnitt auf und die Überwurfmutter weist einen Gegenkoppelabschnitt aufweist, wobei bei einer Montage des Reifendrucksensors zumindest zeitweise der Koppelabschnitt und der Gegenkoppelabschnitt eine formschlüssige und / oder kraftschlüssige Verbindung aufweisen.

Durch die Erfindung wird ein Reifendruckkontrollsystem zur Verfügung gestellt, welches sich durch eine funktionsgerechte Konstruktion auszeichnet und einen einfachen und kostengünstigen Aufbau aufweist. Im Unterschied zum Stand der Technik findet die Kopplung der Überwurfmutter mit dem Reifenventil mittels des Koppelabschnitts der Ventilkappe und des Gegenkoppelabschnitt der Überwurfmutter statt. Ferner unterscheidet sich die Erfindung zum Stand der Technik, bei dem eine Art Sollbruchstelle verdeckt im Inneren einer Überwurfmutter ausgebildet ist, dass die Trennung der Kappe in zwei Abschnitte bei der vorliegenden Erfindung optisch erfassbar ist. Es ist dementsprechend für den Monteur optisch erkennbar, ob die für eine Kopplung erforderliche Ventilkappe schon einmal verwendet wurde oder nicht und, ob der Schraubvorgang überhaupt korrekt ausgeführt wurde. Dadurch, dass der Koppelabschnitt mit der Ventilkappe einteilig ausgebildet ist, insbesondere als ein Spritzgussteil, ist es möglich eine Reduzierung der Bauteilanzahl des Reifendruckkontrollsystems zu erreichen, denn es Bedarf keines separaten Sollbruchelements. Darüber hinaus ist die Ventilkappe bereits standardmäßig vorgesehen, um das Reifenventil abzudichten und vor Verschmutzungen zu schützen. Ferner kann ein Montageschritt eingespart werden, weil die Ventilkappe bereits am Reifenventil vormontiert geliefert wird und bei der Montage an eine Felge nicht abgenommen werden muss. Denn bei großen Firmen, die große Stückzahlen der Reifendrucksensoren an die Felge montieren müssen, wird die Luft mit einer Spezialvorrichtung durch einen Spalt zwischen Felge und Reifen eingebracht.

Nach einer weiteren vorteilhaften Ausführungsform der Erfindung kann vorgesehen sein, dass der Koppelabschnitt der Ventilkappe mindestens einen Anschlag aufweist, welcher insbesondere als umlaufender nach außen gerichteter Vorsprung ausgebildet ist. Durch diese Maßnahme gelingt es, dass durch das auf die Überwurfmutter ausgeübte Aufschraubmoment, beim Erreichen des Anschlags auf der Ventilkappe, das Aufschraubmoment auf das Reifenventil übertragen wird. Dies bewirkt, dass das Sensorgehäuse mittels einer kalottenförmigen Stirnfläche des Reifenventils und einer verdrehsicheren Schraube im Sensorgehäuse an die Felge gedrückt wird und eine sichere Auflage im Felgenbett geschaffen wird. Dadurch, dass der bereits vorhandene Gegenanschlag in der Überwurfmutter genutzt wird, ist lediglich notwendig, dass die Ventilkappe geringfügig angepasst wird.

Nach einer weiteren vorteilhaften Ausführungsform der Erfindung kann vorgesehen sein, dass der Anschlag als ein Sollbruchelement dient. Sehr kostengünstig und einfach ist die Konstruktion, wenn das Anlenken des Sensorgehäuses an die Felge mit dem Anschlag selbst erfolgt, sodass die Sollbruchstelle nicht extra vorgesehen sein muss.

Nach einer weiteren bevorzugten Ausführungsform der Erfindung kann vorgesehen sein, dass der Anschlag als ein separat umlaufender Ring mit der Ventilkappe verbindbar ist. Durch diese Maßnahme gelingt es, dass das eine Standard Ventilkappe verwendet werden kann. Ferner ist eine Widerverwendung der Kappe dadurch gegeben. Besonders vorteilhaft ist, wenn die Ventilkappe und der umlaufende Ring eine formschlüssige und/oder kraftschlüssige, insbesondere mittels Aufschrumpfens, und/oder stoffschlüssige die Verbindung aufweisen.

Nach einer weiteren bevorzugten Ausführungsform der Erfindung kann vorgesehen sein, dass die Ventilkappe eine Sollbruchstelle aufweist. Dadurch wird gewährleistet, dass nach dem Trennen des Koppelabschnitts der Ventilkappe als eine Dichtung verwendet werden kann. Ferner kann die Form der Sollbruchstelle mit einer bekannten Kerbwirkungszahl gewählt werden, um reproduzierbares Trennen der beiden Abschnitte und ein vorgegebenes Aufschraubmoment zu erreichen.

Nach einer weiteren bevorzugten Ausführungsform der Erfindung kann vorgesehen sein, dass die Ventilkappe einen Kappenabschnitt aufweist, wobei der Kappenabschnitt und der Koppelabschnitt mit der Sollbruchstelle miteinander verbunden sind. Dadurch wird gewährleistet, dass die Länge des Kappenabschnitts der Ventilkappe durch ein axiales Verschieben der Sollbruchstelle auf der Ventilkappe einstellbar ist. Ferner kann die Form der Sollbruchstelle mit einer bekannten Kerbwirkungszahl gewählt werden, um reproduzierbares Trennen der beiden Abschnitte und ein vorgegebenes Aufschraubmoment zu erreichen.

Nach einer weiteren bevorzugten Ausführungsform der Erfindung kann vorgesehen sein, dass die Überwurfmutter eine Innenfläche aufweist, wobei auf der Innenfläche der Überwurfmutter ein Gegenanschlag angeordnet ist, welcher komplementär zum dem Koppelabschnitt der Ventilkappe ausgebildet ist. Dadurch wird gewährleistet, dass die, durch den auf die Überwurfmutter aufgebrachtes Aufschraubmoment, entstandene Zugkraft optimal übertragen wird.

Nach einer weiteren bevorzugten Ausführungsform der Erfindung kann vorgesehen sein, dass die Ventilkappe eine Materialschwächung aufweist, welche als Sollbruchstelle ausgebildet ist. Durch diese Maßnahme gelingt es weiter, dass die Reproduzierbarkeit des Bruchs zu verbessern.

Nach einer weiteren bevorzugten Ausführungsform der Erfindung kann vorgesehen sein, dass die Materialschwächung als eine umlaufend radial von außen nach innen ausgerichtete Nut ausgebildet ist. Dadurch wird gewährleistet, dass eine nach erfolgtem Bruch entstandene Trennkante zwischen Koppelabschnitt und dem Kappenabschnitt eine äußerlich saubere Abtrennung aufweist.

Nach einer weiteren bevorzugten Ausführungsform der Erfindung kann vorgesehen sein, dass auf der Ventilkappe mindestens eine Rastverbindung zum Verbinden der Überwurfmutter angeordnet ist. Diese Lösung zeichnet sich besonders dadurch aus, dass bei fehlenden Spezialvorrichtungen zum Aufpumpen des Reifen zwischen Reifen und Felge die Ventilkappe nicht mit dem Ventil, sondern mit der Überwurfmutter vormontiert wird. Die Rastverbindung bildet sowohl eine Verdrehsicherung als auch eine axiale Sicherung in Richtung einer Mittelachse der Ventilkappe. Dann wird die vormontierte Montageeinheit auf das Reifenventil bis zum Anschlag der Ventilkappe aufgeschraubt. Anschließend findet die Kopplung zwischen der Überwurfmutter und dem Reifenventil mittels der Ventilkappe, um den Reifendrucksensor zu befestigen. Nach dem Überschreiten des vorgegebenen Aufschraubmoments findet die Entkoppelung der Montageeinheit statt, um das Reifenventil an der Felge zu befestigen. Anschließend kann die Ventilkappe abgenommen werden und der Reifen mit Luft aufgepumpt werden.

Durch diese Maßnahme gelingt es trotz der fehlenden Spezialvorrichtung einen Montageschritt zu sparen.

Der Fertigungsprozess wird verbessert, wenn die Überwurfmutter einen Innendurchmesser d aufweist.

Die Montage des Reifendruckkontrollsystems kann vereinfacht werden, wenn die Ventilkappe einen Kappenabschnitt mit einem Außendurchmesser D aufweist und die Überwurfmutter einen Abschnitt mit einem Innendurchmesser d aufweist, wobei der Außendurchmesser D kleiner als Innendurchmesser d ausgebildet ist oder der Außendurchmesser D gleich dem Innendurchmesser d ausgebildet ist.

Die Montage des Reifendruckkontrollsystems kann weiter vereinfacht, wenn die Ventilkappe und die Überwurfmutter mit einer Spielpassung, oder mit einer Presspassung, oder mit der Rastverbindung derart verbindbar sind, dass die Ventilkappe und die Überwurfmutter eine, insbesondere selbsthaltende, Montageeinheit bilden.

Nach einer weiteren bevorzugten Ausführungsform der Erfindung kann vorgesehen sein, dass der Kappenabschnitt und der Koppelabschnitt der Überwurfmutter nach Überschreiten eines vorbestimmten Aufschraubmoments, insbesondere von 2,8-4,2 Nm, voneinander entkoppelbar sind. Durch diese Maßnahme gelingt es weiter, dass der Reifendrucksensor an die Felge im richtigen Winkel, ohne dass Beschädigungen an den beteiligten Bauteilen auftreten, befestigt wird. Durch die Entkopplung der beiden Abschnitte kann das Reifenventil durch weiteres Aufschrauben der Überwurfmutter an die Felge befestigt werden.

Der Fertigungsprozess kann verbessert werden, wenn die Ventilkappe aus Kunststoff, insbesondere mittels Spritzgießverfahrens, ausgebildet ist.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der beispielhafte bevorzugte Ausführungsbeispiele der Erfindung dargestellt sind. In der Zeichnung zeigt:
Figur 1: den hinteren Teil eines Fahrzeugs mit einer Felge, einem Luftreifen und einem Reifenventil,
Figur 2: eine perspektivische Darstellung auf eine Felge, an der ein Reifendruckkontrollsystem gemäß der vorliegenden Erfindung angebracht ist,
Figur 3 eine Perspektivansicht auf das erfindungsgemäße Reifendruckkontrollsystem, wobei der Konturverlauf der Felge lediglich angedeutet ist,
Figur 4 eine perspektivische Einzelteildarstellung des erfindungsgemäßen Reifendruckkontrollsystems,
Figur 5 einen ersten Montageschritt, bei dem das Reifenventil, an dem ein Reifendrucksensor angebracht ist, durch ein Durchgangsloch in der Felge gesteckt wird,
Figur 6 einen zweiten Montageschritt, bei dem das Reifenventil innenseitig an die Felge gedrückt wird und eine Überwurfmutter über den durchgesteckten Abschnitt des Reifenventils gesteckt wird,
Figur 7 einen dritten Montageschritt, bei dem die Überwurfmutter auf einen Gewindeabschnitt des Reifenventils geschraubt wird,
Figur 8 einen vierten Montageschritt, bei dem der Reifendrucksensor an das Felgenbett gedrückt
Figur 9 einen fünften Montageschritt, bei dem das Schraubelement mit dem Reifendrucksensor verschraubt wird,
Figur 10 einen sechsten Montageschritt, bei dem ein vorbestimmtes Aufschraubmoment erreicht wird und der Koppelabschnitt der Ventilkappe entkoppelt wird, so dass die Überwurfmutter mit der Felge fest verschraubt werden kann,
Figur 11 eine Ventilkappe gemäß der ersten Ausführungsform in Perspektivansicht,
Figur 12 eine Ventilkappe mit alternativer Ausgestaltung gemäß der ersten Ausführungsform in Perspektivansicht,
Figur 13 eine Ventilkappe mit alternativer Ausgestaltung gemäß der ersten Ausführungsform in Perspektivansicht,
Figur 14 eine Ventilkappe mit alternativer Ausgestaltung gemäß der ersten Ausführungsform in Perspektivansicht,
Figur 15 eine Ventilkappe gemäß der zweiten Ausführungsform in Perspektivansicht,
Figur 16 einen ersten Montageschritt, bei dem das Reifenventil mit einem vormontierten Montagemodul (umfassend die Überwurfmutter und Ventilkappe) an der Felge montiert wird, gemäß der zweiten Ausführungsform
Figur 17 einen zweiten Montageschritt, bei dem das vormontierte Montagemodul (umfassend die Überwurfmutter und Ventilkappe) auf einen Gewindeabschnitt des Reifenventils geschraubt wird, gemäß der zweiten Ausführungsform,

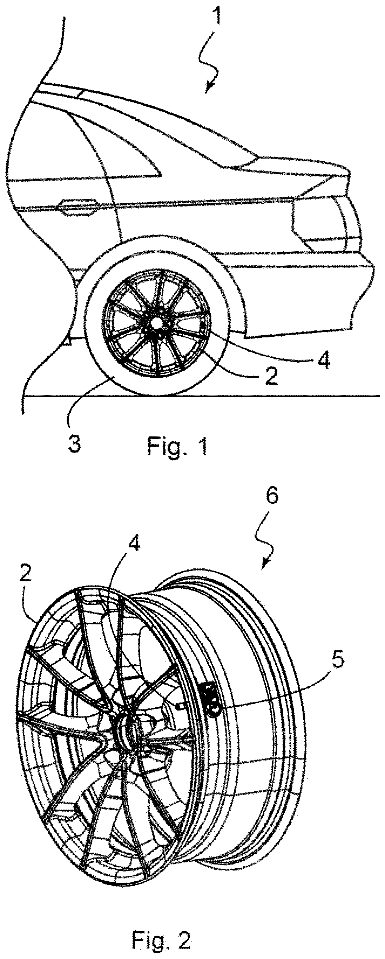

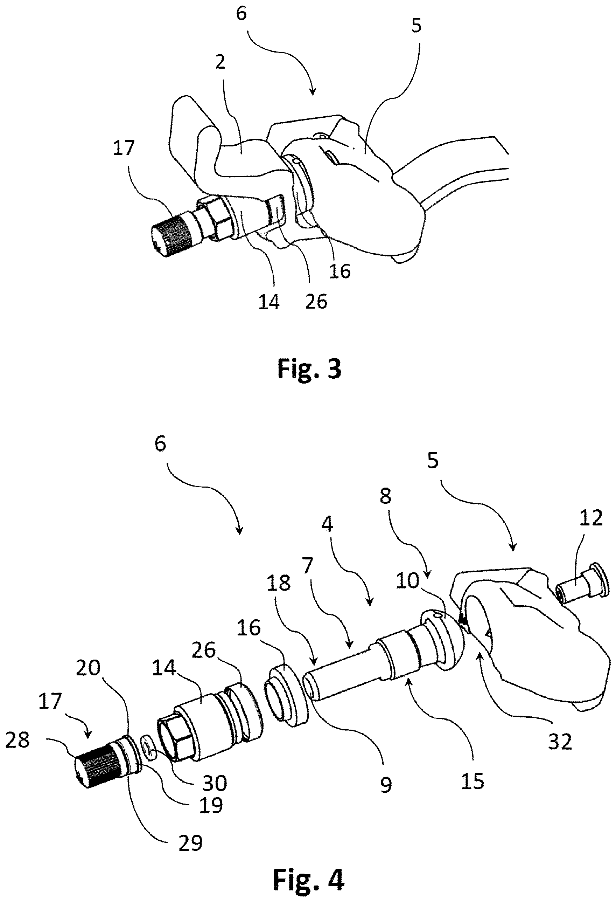

In Figur 1 ist das Heck eines Fahrzeugs 1 und ein auf einer Felge 2 sitzender, hinterer Luftreifen 3 zu sehen. Aus der Felge 2 ragt ein Reifenventil 4 hervor, an dessen Ventilfuß 8 ein Reifendrucksensor 5 befestigt ist, wie es aus den Figuren 2 und 3 ersichtlich ist.

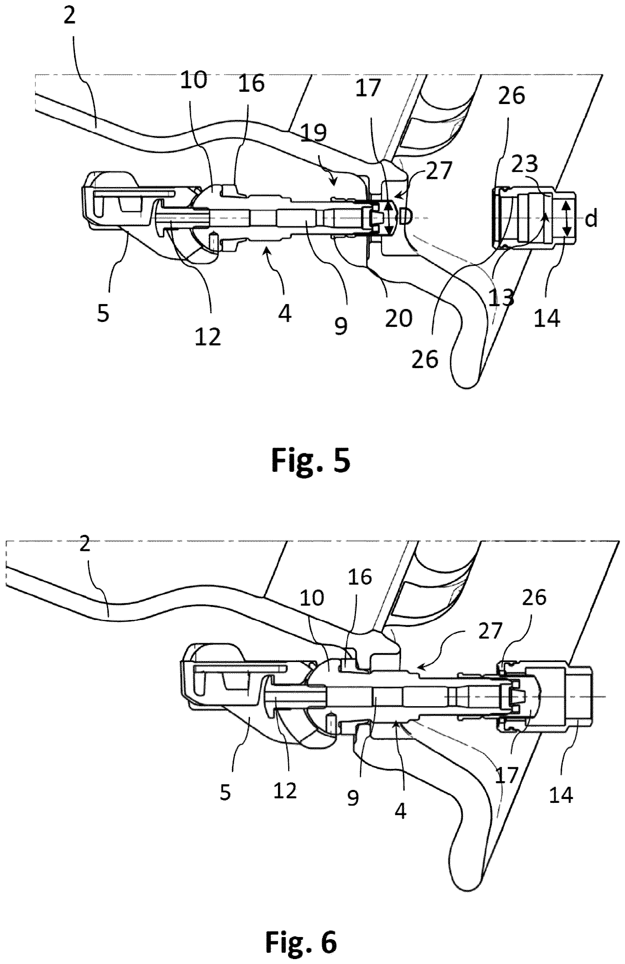

Figur 3 zeigt eine Perspektivansicht eines erfindungsgemäßen Reifendruckkontrollsystems 6, wobei der Konturverlauf der Felge 2 aus Gründen einer besseren Übersichtlichkeit in der Figur 3 nur angedeutet ist. In Figur 4 ist das erfindungsgemäße Reifendruckkontrollsystem 6 ebenfalls in einer perspektivischen Darstellung gezeigt, allerdings hier in einer Einzelteildarstellung. In der Felge 2 ist eine lediglich aus den Figuren 5 bis 10 ersichtliche Durchgangsöffnung 27 ausgeformt, durch die ein Ventilschaft 7 des Reifenventils 4 gesteckt ist. Das Reifenventil 4 weist eine axial verlaufende Ventilbohrung 9 (siehe unter anderem Figuren 5 bis 10) auf, die in einer kalottenförmigen Stirnfläche 10 des Ventilfußes 8 mündet. An dem Ventilfuß 8 fernen Ende des Reifenventils 4 ist eine Ventilkappe 17 auf das Ende aufschraubbar. In der Ventilkappe 17 kann eine Dichtung 30 angeordnet sein. Der Reifendrucksensor 5 ist über ein Schraubelement 12, welches zum Beispiel eine Hohlschraube sein kann, in bekannter Weise an dem Reifenventil 4 fixiert, indem das Schraubelement 12 in die Ventilbohrung 9 eingeschraubt wird. Dabei ist die kalottenförmige Stirnfläche 10 des Ventilfußes 8 in einer Kaverne 32 des Gehäuses des Reifendrucksensors 5 (siehe zum Beispiel Figur 4) angeordnet. Auf der anderen Seite der Felge 2 ist das Reifenventil 4 mit Hilfe einer Überwurfmutter 14 an der Felge 2 fixiert, die auf einen Gewindeabschnitt 15 aufgeschraubt wird, wobei der Gewindeabschnitt 15 auf dem Ventilschaft 7 des Reifenventils 4 ausgebildet ist. Zwischen dem Ventilfuß 8 und der Felge 2 ist ein elastischer Ring 16 auf den Ventilschaft 7 aufgeschoben, der innenseitig der Felge 2 eine Art Dämpfer zwischen Felge 2 und Reifendrucksensor 5 darstellt. Außenseitig der Felge 2 ist ein Felgenschutzring 26 angeordnet. Der Felgenschutzring 26 ist auf den Ventilschaft 7 aufgeschoben und zwischen der Überwurfmutter 14 und der Felge 2 angeordnet.

Erfindungsgemäß weist die Ventilkappe 17 einen Koppelabschnitt 19 auf und die Überwurfmutter 14 weist einen Gegenkoppelabschnitt 13 auf, wobei bei einer Montage des Reifendrucksensors 5 zumindest zeitweise der Koppelabschnitt 19 und der Gegenkoppelabschnitt 13 eine formschlüssige und / oder kraftschlüssige Verbindung aufweisen, worauf nachstehend noch im Detail eingegangen wird.

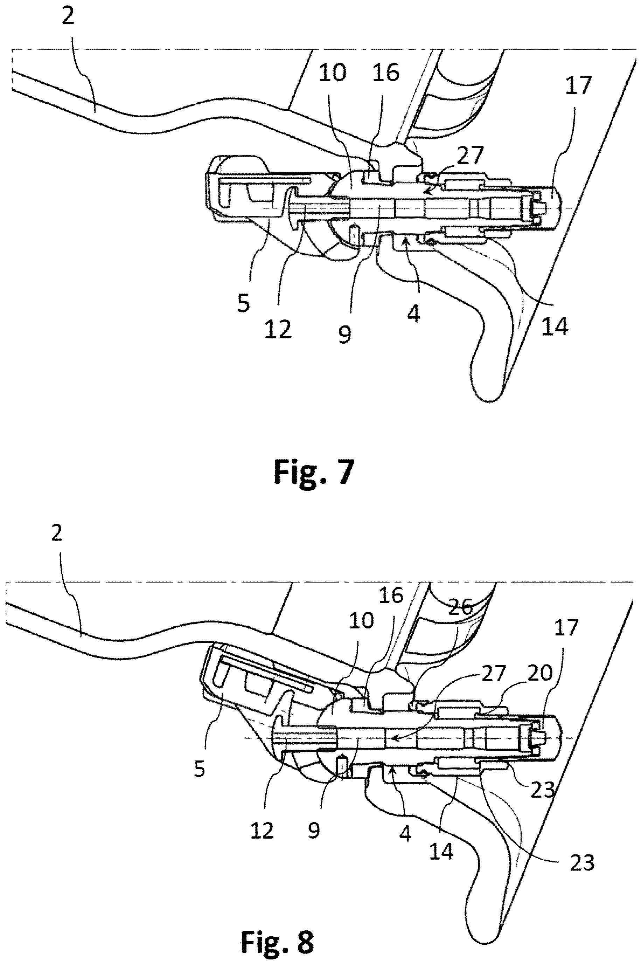

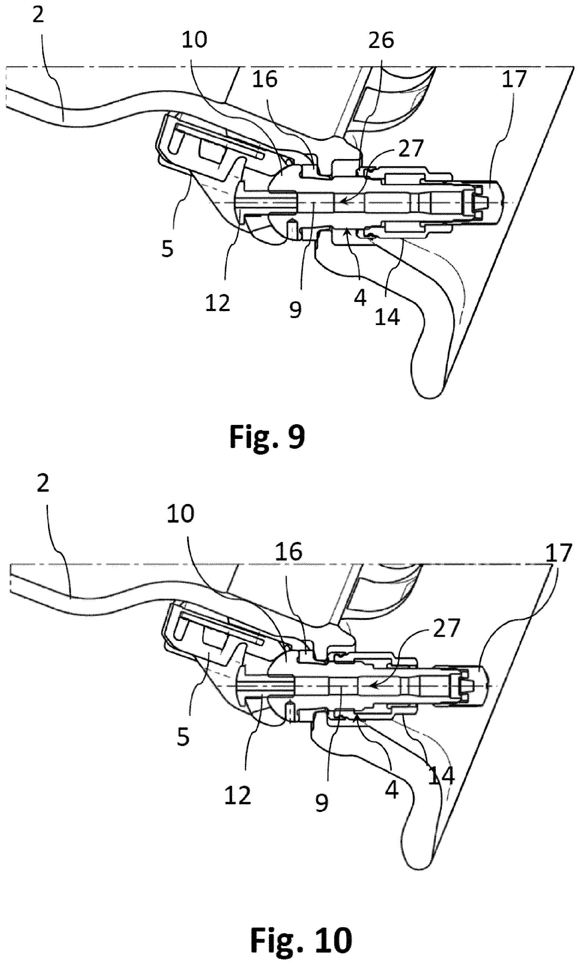

Zuvor ist in den Figuren 5 bis 10 in schematischer Weise der Montageverlauf des erfindungsgemäßen Reifendruckkontrollsystems 6 gezeigt. Bei der ersten Ausführungsform wird das Reifenventil 4 mit der Ventilkappe 17 geliefert. Auf der Ventilkappe 17 ist ein umlaufend nach außen gerichteter Vorsprung ausgebildet, welcher als ein Anschlag 20 zum Übertragen des auf die Überwurfmutter 14 ausgeübten Aufschraubmoments dient. Damit die Kopplung zwischen der Ventilkappe 17 und der Überwurfmutter erfolgen kann, ist ein Gegenanschlag 23 auf der Innenfläche der Überwurfmutter 14 angeordnet. Vor der eigentlichen Montage ist der Reifendrucksensor 5 mit dem Reifenventil 4 bereits verschraubt, wobei die Verschraubung noch relativ locker ist und eine relative Bewegung zwischen dem Reifenventil 4 und dem Reifendrucksensor 5 erlaubt. Mit anderen Worten erlaubt die kalottenförmige Stirnfläche 10 des Ventilfußes 8, die in der Kaverne 32 des Reifendrucksensors 5 angeordnet ist, eine relative Schwenkbewegung. In einem ersten Montageschritt (siehe Figur 5) wird das Reifenventil 4 durch eine Durchgangsöffnung 27 in der Felge 2 durchgesteckt, so dass der Gewindeabschnitt 15 des Ventilschafts 7 auf der anderen (außen liegenden) Seite der Felge 2 angeordnet ist. In einem zweiten Montageschritt (siehe Figur 6) wird dann das Reifenventil 4 innenseitig an die Felge 2 gedrückt. Ferner wird in einem dritten Montageschritt (siehe Figur 7) die Überwurfmutter 14 auf den durch die Durchgangsöffnung 27 hindurchgesteckten Ventilschaft 7 mit dem Gewindeabschnitt 15 aufgesteckt. Dabei wird die Überwurfmutter 14 auf den Gewindeabschnitt 15 des Reifenventils 4 aufgeschraubt, wobei die Überwurfmutter 14 bei dem Schraubvorgang mit der Ventilkappe 17 gekoppelt wird. Dadurch dass, dass die Ventilkappe 17 bis zum Anschlag auf dem Reifenventil 4 aufgeschraubt wird, kann der auf der Ventilkappe 17 angeordneter Anschlag axiale Kraft aufnehmen, die aufgrund des Aufschraubvorgangs der Überwurfmutter entsteht. Die Kopplung zwischen der Überwurfmutter und der Ventilkappe 17 bewirkt, dass das Reifenventil mitgedreht wird. In einem vierten Montageschritt (siehe Figur 8) wird der Reifendrucksensor 5 an das Felgenbett der Felge 2 angedrückt, so dass das Gehäuse des Reifendrucksensors 5 auf dem Felgenbett aufliegt. Das Anfrücken des Reifendrucksensors 5 auf das Felgenbett erfolgt dadurch, dass das Aufschraubmoment auf das Befestigungselement 12, welches als eine verdrehsichere Schraube ausgebildet ist, übertragen wird. Die Schraube bewirkt eine Winkelverstellung des Reifendrucksensors durch die am Reifenventil kalottenförmig ausgebildete Stirnfläche 10. Anschließend wird in einem fünften Montageschritt (siehe Figur 9) das Schraubelement 12 mit dem Reifendrucksensor verschraubt, indem die Überwurfmutter 14 gedreht wird. Die Überwurfmutter 14 ist erfindungsgemäß mit der Ventilkappe 17 und dem Reifenventil 4 bis zu einem vorbestimmten Aufschraubmoment formschlüssig verbunden, so dass eine anfängliche Drehbewegung der Überwurfmutter 14 zu einem Festziehen des Schraubelements 12 führt, bis das Schraubelement 12 bis zu einem Anschlag am Gehäuse des Reifendrucksensors 5 eingeschraubt ist. Auf diese Weise wird eine Verschraubung des Ventilschafts 7 auf der Innenseite der Felge 2 mit dem Schraubelement 12 des Reifendrucksensors 5 erreicht. Ist dort das Schraubelement 12 bis zum Anschlag eingedreht, so steigt das Drehmoment zwischen der Ventilkappe 17 und der Überwurfmutter 14 bzw. dem Reifenventil 4 an, so dass die auf der Ventilkappe 17 angeordnete Sollbruchstelle beim Übersteigen des vorgegebenen Drehmoments bricht und die Überwurfmutter 14 weiter auf den Gewindeabschnitt 15 des Ventilschafts 7 aufgeschraubt werden kann, bis die Überwurfmutter 14 an der Felge 2 anliegt und das Reifenventil 4 an der Felge 2 fixiert ist (siehe Figur 10).

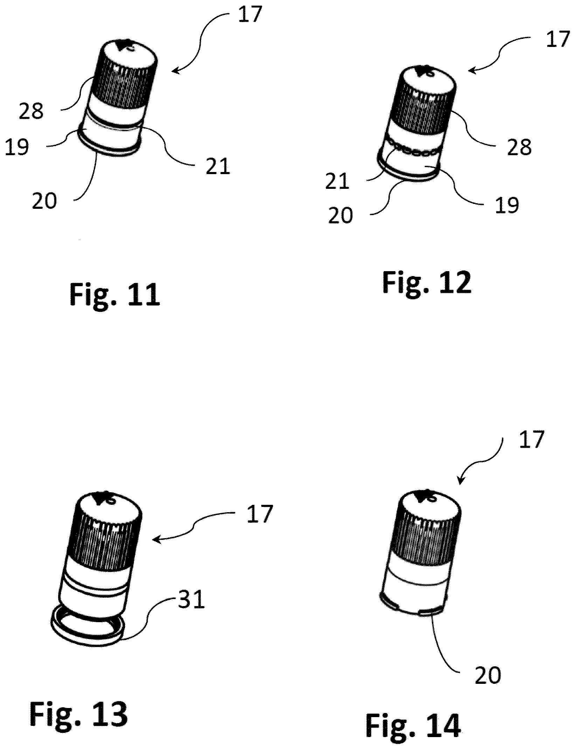

Die Figur 11 zeigt eine Ventilkappe 17 gemäß der ersten Ausführungsform in Perspektivansicht. Die Ventilkappe 17 weist einen Koppelabschnitt 19 und einen Kappenabschnitt 28 auf, wobei der Koppelabschnitt 19 der Ventilkappe 17 und der Gegenkoppelabschnitt 13 der Überwurfmutter 14 eine formschlüssige und / oder kraftschlüssige Verbindung aufweisen. Auf dem Koppelabschnitt 19 ist ein umlaufend radial nach außen ausgerichteter Vorsprung 20 angeordnet. Der Koppelabschnitt 19 und der Kappenabschnitt 28 sind mit einer Sollbruchstelle 29 verbunden. Die Sollbruchstelle 29 ist als eine umlaufend radial nach innen ausgerichtete Materialschwächung, insbesondere in Form einer umlaufenden Nut ausgebildet. Die Ventilkappe 17 ist bevorzugt mittels eines Kunststoffspritzgussverfahrens gefertigt. Die Ventilkappe 17 kann aus Metall bestehen.

Figur 12 zeigt eine Ventilkappe 17 mit alternativer Ausgestaltung gemäß der ersten Ausführungsform in Perspektivansicht. Die Ventilkappe 17 weist einen Koppelabschnitt 19 und einen Kappenabschnitt 28 auf. Auf dem Koppelabschnitt 19 ist ein umlaufend radial nach außen ausgerichteter Vorsprung 20 angeordnet, welcher eine formschlüssige Verbindung mit der Überwurfmutter 14 bildet Der Koppelabschnitt 19 und der Kappenabschnitt 28 sind mit einer Sollbruchstelle 29 verbunden. Die Sollbruchstelle 29 ist als eine auf dem Außendurchmesser umlaufende Materialschwächung 21 in Form einer Perforierung ausgebildet. Die Ventilkappe 17 ist bevorzugt mittels eines Kunststoffspritzgussverfahrens gefertigt. Es ist auch möglich Ventilkappe 17 aus Metall auszubilden.

Figur 13 zeigt eine Ventilkappe 17 mit alternativer Ausgestaltung gemäß der ersten Ausführungsform in Perspektivansicht. Die Ventilkappe 17 weist einen Koppelabschnitt 19 und einen Kappenabschnitt 28 auf. Der Koppelabschnitt 19 ist als ein umlaufend radial nach außen ausgerichteter Ring 31 ausgebildet. Der Ring 31 ist als ein separates Bauteil ausgebildet, wobei der Ring 31 auf die Ventilkappe 17 aufschrumpfbar ist und eine formschlüssige Verbindung mit der Überwurfmutter 14 bildet. Diese Ausführungsform benötigt keine zusätzliche Sollbruchstelle 29, da der Ring 31 selbst als Sollbruchelement dient. Es ist auch möglich, dass der Ring 31 elastisch ausbildet ist oder zwischen der Innenfläche der Überwurfmutter 11 geklemmt wird. Infolgedessen wird durch die entstandene Reibung zwischen der Überwurfmutter 14 und der Ventilkappe 17 die kraftschlüssige die Verbindung gebildet, welche zum Befestigen des Reifendrucksensors 5 dient. Nach dem Überschreiten des vorbestimmten Aufschraubmoments wird die Verbindung zwischen der Überwurfmutter 14 und der Ventilkappe 17 entkoppelt. Im weiteren Montageschritt wird das Reifenventil mit der Felge 2 befestigt. Die Ventilkappe 17 ist bevorzugt mittels eines Kunststoffspritzgussverfahrens gefertigt. Es ist auch möglich Ventilkappe 17 aus Metall auszubilden.

Figur 14 zeigt eine Ventilkappe 17 mit alternativer Ausgestaltung gemäß der ersten Ausführungsform in Perspektivansicht. Die Ventilkappe 17 weist einen Koppelabschnitt 19 und einen Kappenabschnitt 28 auf, wobei der Koppelabschnitt 19 der Ventilkappe 17 und der Gegenkoppelabschnitt 13 der Überwurfmutter 14 eine formschlüssige und / oder kraftschlüssige Verbindung aufweisen. Der Koppelabschnitt 19 umfasst mehrere radial nach außen ausgerichtete Vorsprünge 20. Die Ventilkappe 17 kann aus einem zusammenhängenden umlaufend radial nach außen ausgerichteten Vorsprung 20 bestehen. Die Vorsprünge 20 sind materialeinheitlich mit der Ventilkappe 17 mittels eines Kunststoffspritzgussverfahrens gefertigt. Diese Ausführungsform benötigt keine zusätzliche Sollbruchstelle 29, da die Vorsprünge selbst als Sollbruchelement ausgebildet sein können und eine formschlüssige Verbindung mit der Überwurfmutter 14 aufweisen. Die Ventilkappe 17 ist bevorzugt mittels eines Kunststoffspritzgussverfahrens gefertigt. Es ist auch möglich Ventilkappe 17 aus Metall auszubilden.

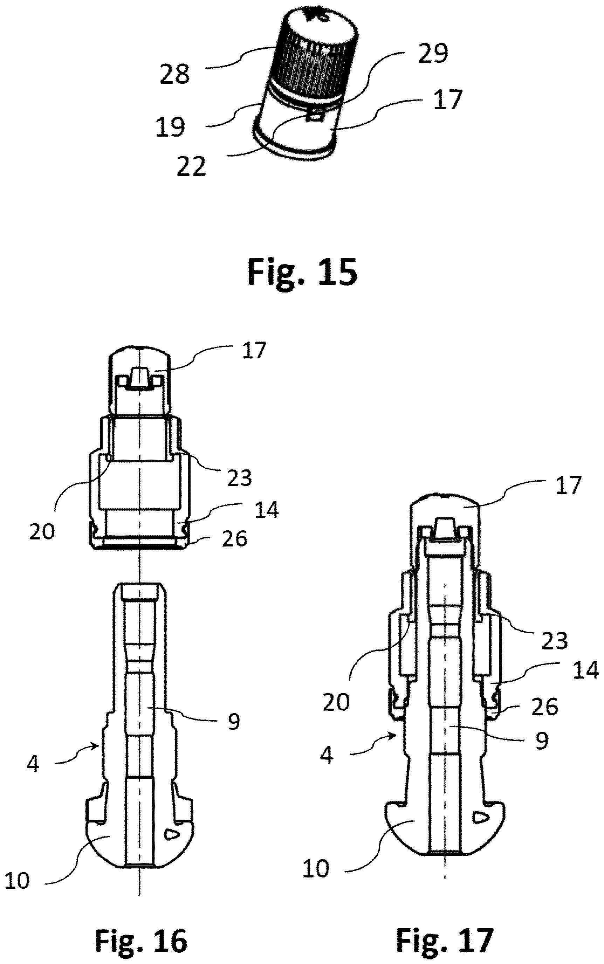

Figur 15 zeigt eine Ventilkappe 17 gemäß der zweiten Ausführungsform in Perspektivansicht. Die Ventilkappe 17 weist einen Koppelabschnitt 19 und einen Kappenabschnitt 28 auf. Auf dem Koppelabschnitt 19 ist ein umlaufend radial nach außen ausgerichteter Vorsprung 20 angeordnet, welcher eine formschlüssige Verbindung mit der Überwurfmutter 14 bildet. Der Koppelabschnitt 19 und der Kappenabschnitt 28 sind mit einer Sollbruchstelle 29 verbunden. Die Sollbruchstelle 29 ist als eine umlaufend radial nach innen ausgerichtete Materialschwächung 21, insbesondere in Form einer umlaufenden Nut ausgebildet. Ferner ist auf dem Außendurchmesser der Ventilkappe 17 eine Rastverbindung angeordnet, welche zur Verbindung der Überwurfmutter 14 mit der Ventilkappe 17 dient. Die Rastverbindung ist derart ausgestaltet, dass die Ventilkappe 17 sowohl drehfest, als auch in die axiale Richtung mit der Überwurfmutter 14 verbunden. Die Ventilkappe 17 und die Überwurfmutter 14 können als vormontierte Baugruppe mit dem Reifenventil 4 montiert werden. Die Ventilkappe 17 ist bevorzugt mittels eines Kunststoffspritzgussverfahrens gefertigt. Es ist auch möglich Ventilkappe 17 aus Metall auszubilden.

Figur 16 zeigt einen ersten Montageschritt, bei dem das Reifenventil 4 mit einem vormontierten Montagemodul an der Felge 2 montiert wird, gemäß der zweiten Ausführungsform. Die zweite Ausführungsform unterscheidet sich von der ersten Ausführungsform, indem der Auslieferungszustand nicht wie in der ersten Ausführungsform das Reifenventil 4 mit der Ventilkappe 17 vormontiert ist, sondern die Überwurfmutter 14 wird mit der Ventilkappe 17 vormontiert. Diese Lösung ist für Kunden gedacht, die keine Spezialvorrichtung zum Befüllen von Reifen besitzen, welche die Räder mit der Luft über einen Spalt zwischen dem Reifen und der Felge 2 befüllen können und somit in dem Fall die Ventilkappe 17 abschrauben müssten.

Figur 17 zeigt einen zweiten Montageschritt, bei dem das vormontierte Montagemodul (umfassend die Überwurfmutter 14 und Ventilkappe 17) auf einen Gewindeabschnitt des Reifenventils 4 geschraubt wird, gemäß der zweiten Ausführungsform.

Bei diesem Montageschritt wird die Montageeinheit umfassend Überwurfmutter 14 und Ventilkappe 17 auf den für die Ventilkappe 17 vorgesehenen Gewindeabschnitt der Ventilkappe aufgeschraubt. Der Gewindeabschnitt der Ventilkappe ist im Bereich des Lufteinlassendes 18 angeordnet. Im weiteren Schritt werden der Koppelabschnitt 19 der Ventilkappe 17 und der Gegenkoppelabschnitt 13 der Überwurfmutter 14 zumindest zeitweise durch eine formschlüssige und / oder kraftschlüssige Verbindung gekoppelt. Infolgedessen wird das Aufschraubmoment auf das Reifenventil 4 übertragen, sodass das Reifenventil 4 mitgenommen wird. Im weiteren Montageschritt wird der Reifendrucksensor an die Felge 2 gedrückt und in dieser Position mit Hilfe des Befestigungselements 12 fixiert. Wenn das vorbestimmte Drehmoment erreicht ist, wird die formschlüssige und / oder kraftschlüssige Verbindung zwischen der Ventilkappe 17 und der Überwurfmutter 14 entkoppelt. Im Weiteren Schritt wird die Überwurfmutter 14 weitergedreht und somit wird das Reifenventil 4 mit der Felge 2 fest verbunden. Anschließend kann die Ventilkappe 17 abgenommen werden und der Reifen mit Luft aufgepumpt werden. Im letzten Montageschritt wird die Ventilkappe 17 auf das Reifenventil 4 aufgeschraubt.

Ferner kann der Anschlag 20 der Ventilkappe 17 bei allen Ausführungsformen als ein Verformungselement ausgebildet sein, welches elastisch oder irreversibel verformbar ist und eine formschlüssige oder kraftschlüssige Verbindung mit der Überwurfmutter 14 aufweist.

Die vorstehend beschriebene Erfindung ist selbstverständlich nicht auf die beschriebenen und dargestellten Ausführungsformen beschränkt. Es ist ersichtlich, dass an den in der Zeichnung dargestellten Ausführungsformen zahlreiche, dem Fachmann entsprechend der beabsichtigten Anwendung naheliegende Abänderungen vorgenommen werden können, ohne dass dadurch der Bereich der Erfindung verlassen wird. Zur Erfindung gehört alles dasjenige, was in der Beschreibung enthalten und/oder in der Zeichnung dargestellt ist, einschließlich dessen, was abweichend von den konkreten Ausführungsbeispielen für den Fachmann naheliegt.

### Bezugszeichenliste

- 1: Fahrzeug
- 2: Felge 2
- 3: Luftreifen
- 4: Reifenventil 4
- 5: Reifendrucksensor
- 6: Reifendruckkontrollsystem
- 7: Ventilschaft
- 8: Ventilfuß
- 9: Ventilbohrung
- 10: Stirnfläche
- 11: Innenfläche der Überwurfmutter
- 12: Befestigungselement /Schraube / Schraubelement
- 13: Gegenkoppelabschnitt
- 14: Überwurfmutter
- 15: Gewindeabschnitt
- 16: elastischer Ring
- 17: Ventilkappe
- 18: Lufteinlassende
- 19: Koppelabschnitt
- 20: Anschlag / Vorsprung
- 21: Materialschwächung 21
- 22: Rastverbindung
- 23: Gegenanschlag
- 24: Innendurchmesser d
- 25: Außendurchmesser D
- 26: Felge 2nschutzRing
- 27: Durchgangsöffnung
- 28: Kappenabschnitt
- 29: Sollbruchstelle
- 30: Dichtung
- 31: Ring
- 32: Kaverne

## Patentansprüche

1. Reifendruckkontrollsystem (6) für ein Fahrzeug (1) zur Ermittlung von mindestens einem reifenspezifischen Parameter, aufweisend:
einen an einer Felge (2) eines Luftreifens (3) des Fahrzeugs (1) anbringbaren Reifendrucksensor (5),
ein Reifenventil (4), welches einen Ventilschaft (7) mit einer längsverlaufenden Ventilbohrung (9) aufweist, welche in einer, insbesondere kalottenförmigen, Stirnfläche (10) eines Ventilfußes (8) mündet,
ein Befestigungselement (12), welches den Reifendrucksensor (5) und das Reifenventil (4) an dessen Ventilfuß (8) durch Eingreifen in die Ventilbohrung (9) verbindet,
eine zur Fixierung des Reifenventils (4) an der Felge (2) (2) vorgesehene und auf einen Gewindeabschnitt (15) des Ventilschafts (7) aufgeschraubte Überwurfmutter (14), und
eine Ventilkappe (17), die am Lufteinlassende (18) auf dem Ventilschaft (7) aufschraubbar ist,
**dadurch gekennzeichnet, dass**
die Ventilkappe (17) einen Koppelabschnitt (19) aufweist und
die Überwurfmutter (14) einen Gegenkoppelabschnitt (13) aufweist,
wobei bei einer Montage des Reifendrucksensors (5) zumindest zeitweise der Koppelabschnitt (19) und der Gegenkoppelabschnitt (13) eine formschlüssige und / oder kraftschlüssige Verbindung aufweisen.

2. Reifendruckkontrollsystem (6) nach Anspruch 1, **dadurch gekennzeichnet, dass** der Koppelabschnitt (19) der Ventilkappe (17) mindestens einen Anschlag (20) aufweist, welcher insbesondere als umlaufender nach außen gerichteter Vorsprung (20) ausgebildet ist.

3. Reifendruckkontrollsystem (6) nach Anspruch 2, **dadurch gekennzeichnet, dass** der Anschlag (20) als ein Sollbruchelement dient.

4. Reifendruckkontrollsystem (6) nach Anspruch 2 oder 3, **dadurch gekennzeichnet, dass** der Anschlag (20) als ein separat umlaufender Ring (31) mit der Ventilkappe (17) verbindbar ist.

5. Reifendruckkontrollsystem (6) nach mindestens einem der Ansprüche 1 bis 4, **dadurch gekennzeichnet, dass** die Ventilkappe (17) eine Sollbruchstelle (29) aufweist.

6. Reifendruckkontrollsystem (6) nach mindestens einem der Ansprüche 1 bis 5, **dadurch gekennzeichnet, dass** die Ventilkappe (17) einen Kappenabschnitt (28) aufweist, wobei der Kappenabschnitt (28) und der Koppelabschnitt (19) mit der Sollbruchstelle (29) miteinander verbunden sind.

7. Reifendruckkontrollsystem (6) nach mindestens einem der Ansprüche 1 bis 6, **dadurch gekennzeichnet, dass** die Überwurfmutter (14) eine Innenfläche (21) aufweist, wobei auf der Innenfläche (21) der Überwurfmutter (14) ein Gegenanschlag (23) angeordnet ist, welcher komplementär zum dem Koppelabschnitt (19) der Ventilkappe (17) ausgebildet ist.

8. Reifendruckkontrollsystem (6) nach mindestens einem der Ansprüche 1 bis 7, **dadurch gekennzeichnet, dass** die Ventilkappe (17) eine Materialschwächung (21) aufweist, welche als Sollbruchstelle (29) ausgebildet ist.

9. Reifendruckkontrollsystem (6) nach Anspruch 8, **dadurch gekennzeichnet, dass** die Materialschwächung (21) als eine umlaufend radial von außen nach innen ausgerichtete Nut ausgebildet ist.

10. Reifendruckkontrollsystem (6) nach mindestens einem der Ansprüche 1 bis 9, **dadurch gekennzeichnet, dass** auf der Ventilkappe (17) mindestens eine Rastverbindung (22) zum Verbinden der Überwurfmutter (14)angeordnet ist.

11. Reifendruckkontrollsystem (6) nach
mindestens einem der Ansprüche 1 bis 10, **dadurch gekennzeichnet, dass** die Überwurfmutter (14) einen Innendurchmesser d (24) aufweist.

12. Reifendruckkontrollsystem (6) nach mindestens einem der Ansprüche 1 bis 11, **dadurch gekennzeichnet, dass** die Ventilkappe (17) einen Kappenabschnitt (28) mit einem Außendurchmesser D (25) aufweist und die Überwurfmutter (14) einen Abschnitt mit einem Innendurchmesser d (24) aufweist, wobei der Außendurchmesser D (25) kleiner als Innendurchmesser d (24) ausgebildet ist oder der Außendurchmesser D (25) gleich dem Innendurchmesser d (24) ausgebildet ist.

13. Reifendruckkontrollsystem (6) nach mindestens einem der Ansprüche 1 bis 12, **dadurch gekennzeichnet, dass** die Ventilkappe (17) und die Überwurfmutter (14) mit einer Spielpassung, oder mit einer Presspassung, oder mit der Rastverbindung (22) derart verbindbar sind, dass die Ventilkappe (17) und die Überwurfmutter (14)eine, insbesondere selbsthaltende, Montageeinheit bilden.

14. Reifendruckkontrollsystem (6) nach mindestens einem der Ansprüche 1 bis 13, **dadurch gekennzeichnet, dass** der Kappenabschnitt (28) und der Koppelabschnitt (19) nach Überschreiten eines vorbestimmten Aufschraubmoments, insbesondere von 2,8-4,2 Nm, voneinander entkoppelbar sind.

15. Reifendruckkontrollsystem (6) nach mindestens einem der Ansprüche 1 bis 14, **dadurch gekennzeichnet, dass** die Ventilkappe (17) aus Kunststoff, insbesondere mittels Spritzgießverfahrens, ausgebildet ist.

## Claims

1. Tyre pressure checking system (6) for a vehicle (1) for determining at least one tyre-specific parameter, having:
a tyre pressure sensor (5) attachable to a rim (2) of a pneumatic tyre (3) of the vehicle (1),
a tyre valve (4) which has a valve stem (7) with a longitudinally extending core chamber (9) that opens into a particularly dome-shaped end face (10) of a valve base (8),
a fastening element (12) which connects the tyre pressure sensor (5) and the tyre valve (4) at the valve base (8) thereof by engaging in the core chamber (9),
a union nut (14) that is provided to fasten the tyre valve (4) to the rim (2) and is screwed onto a threaded portion (15) of the valve stem (7), and
a valve cap (17) which can be screwed onto the air inlet end (18) of the valve stem (7),
**characterized in that**
the valve cap (17) has a coupling section (19) and the union nut (14) has a mating coupling section (13),
wherein the coupling section (19) and the mating coupling section (13) form a positive locking and/or a non-positive locking connection at least periodically during installation of the tyre pressure sensor (5).

2. Tyre pressure checking system (6) according to Claim 1, **characterized in that** the coupling section (19) of the valve cap (17) has at least one limit stop (20) which is constructed in particular as an outwardly formed circumferential projection (20).

3. Tyre pressure checking system (6) according to Claim 2, **characterized in that** the limit stop (20) serves as a frangible element.

4. Tyre pressure checking system (6) according to Claim 2, **characterized in that** the limit stop (20) can be connected to the valve cap (17) as a separately circumferential ring (31).

5. Tyre pressure checking system (6) according to at least one of Claims 1 to 4, **characterized in that** the valve cap (17) has a predetermined breaking point (29) .

6. Tyre pressure checking system (6) according to at least one of Claims 1 to 5, **characterized in that** the valve cap (17) has a cap section (28), wherein the cap section (28) and the coupling section (19) are connected to each other via the predetermined breaking point (29).

7. Tyre pressure checking system (6) according to at least one of Claims 1 to 6, **characterized in that** the union nut (14) has an internal face (21), wherein a counterstop (23) is arranged on the internal face (21) of the union nut (14) that is designed as the complement to the coupling section (19) of the valve cap (17).

8. Tyre pressure checking system (6) according to at least one of Claims 1 to 7, **characterized in that** the valve cap (17) has a material weakpoint (21) that is constructed as a predetermined breaking point (29).

9. Tyre pressure checking system (6) according to Claim 8, **characterized in that** the material weakpoint (21) is designed as a radially encircling groove which extends from the outside inwards.

10. Tyre pressure checking system (6) according to at least one of Claims 1 to 9, **characterized in that** at least one snap-lock connection (22) is arranged on the valve cap (17) for connecting the union nut (14).

11. Tyre pressure checking system (6) according to at least one of Claims 1 to 10, **characterized in that** the union nut (14) has an internal diameter d (24).

12. Tyre pressure checking system (6) according to at least one of Claims 1 to 11, **characterized in that** the valve cap (17) has a cap section (28) with an external diameter D (25), and the union nut (14) has a section with an internal diameter d (24), wherein the external diameter D (25) is designed smaller than internal diameter d (24) or the external diameter D (25) is designed the same size as the internal diameter d (24) .

13. Tyre pressure checking system (6) according to at least one of Claims 1 to 12, **characterized in that** the valve cap (17) and the union nut (14) can be connected to each other with a clearance fit or with a press fit or with the snap-lock connection (22) in such manner that the valve cap (17) and the union nut (14) form an installation unit which is in particular self-retaining.

14. Tyre pressure checking system (6) according to at least one of Claims 1 to 13, **characterized in that** the cap section (28) and the coupling section (19) can be uncoupled from one another after a predetermined tightening torque, in particular 2.8-4.2 Nm, is exceeded.

15. Tyre pressure checking system (6) according to at least one of Claims 1 to 14, **characterized in that** the valve cap (17) is constructed from plastic, in particular by means of an injection moulding process.

## Revendications

1. Système de contrôle de pression de pneu (6) pour un véhicule automobile (1) pour déterminer au moins un paramètre spécifique au pneu, comportant :
un capteur de pression de pneu (5) pouvant être monté sur une jante (2) d'un pneumatique (3) du véhicule automobile (1),
une valve de pneu (4), laquelle comporte un corps de valve (7) avec un trou de valve passant longitudinalement (9), lequel débouche dans une surface frontale notamment de type calotte (10) d'un pied de valve (8),
un élément de fixation (12), lequel raccorde le capteur de pression de pneu (5) et la valve de pneu (4) au pied de valve (8) de celle-ci en venant en prise dans le trou de valve (9), et
un écrou de raccord (14) prévu pour la fixation de la valve de pneu (4) à la jante (2) et vissé sur une section filetée (15) du corps de valve (7), et
un bouchon de valve (17), qui peut être vissé sur l'extrémité d'entrée d'air (18) sur le corps de valve (7),
**caractérisé en ce que**
le bouchon de valve (17) comporte une section de couplage (19) et l'écrou de raccord (14) comporte une contre-section de couplage (13),
la section de couplage (19) et la contre-section de couplage (13) comportant au moins temporairement une liaison par conformité de forme et/ou conformité de force lors d'un montage du capteur de pression de pneu (5) .

2. Système de contrôle de pression de pneu (6) selon la revendication 1, **caractérisé en ce que** la section de couplage (19) du bouchon de valve (17) comporte au moins une butée (20), laquelle est constituée comme saillie périphérique orientée (20) vers l'extérieur.

3. Système de contrôle de pression de pneu (6) selon la revendication 2, **caractérisé en ce que** la butée (20) sert d'élément de rupture théorique.

4. Système de contrôle de pression de pneu (6) selon la revendication 2 ou 3, **caractérisé en ce que** la butée (20) peut être raccordée au bouchon de valve (17) en tant que bague séparée périphérique (31).

5. ystème de contrôle de pression de pneu (6) selon au moins l'une quelconque des revendications 1 à 4, **caractérisé en ce que** le bouchon de valve (17) comporte un point de rupture théorique (29).

6. Système de contrôle de pression de pneu (6) selon au moins l'une quelconque des revendications 1 à 5, **caractérisé en ce que** le bouchon de valve (17) comporte une section de bouchon (28), la section de bouchon (28) et la section de couplage (19) étant reliées l'une à l'autre avec le point de rupture théorique (29).

7. Système de contrôle de pression de pneu (6) selon au moins l'une quelconque des revendications 1 à 6, **caractérisé en ce que** l'écrou de raccord (14) comporte une surface intérieure (21), une contre-butée (23) étant disposée sur la surface intérieure (21) de l'écrou de raccord (14), laquelle est constituée de façon complémentaire à la section de couplage (19) du bouchon de valve (17).

8. Système de contrôle de pression de pneu (6) selon au moins l'une quelconque des revendications 1 à 7, **caractérisé en ce que** le bouchon de valve (17) comporte un affaiblissement de matériau (21), lequel est constitué comme point de rupture théorique (29).

9. Système de contrôle de pression de pneu (6) selon la revendication 8, **caractérisé en ce que** l'affaiblissement de matériau (21) est constitué comme une rainure orientée radialement en périphérie de l'extérieur vers l'intérieur.

10. Système de contrôle de pression de pneu (6) selon au moins l'une quelconque des revendications 1 à 9, **caractérisé en ce qu'**au moins un raccord à cran (22) pour raccorder l'écrou de raccord (14) est disposé sur le bouchon de valve (17).

11. Système de contrôle de pression de pneu (6) selon au moins l'une quelconque des revendications 1 à 10, **caractérisé en ce que** l'écrou de raccord (14) comporte un diamètre intérieur d (24).

12. Système de contrôle de pression de pneu (6) selon au moins l'une des revendications 1 à 11, **caractérisé en ce que** le bouchon de valve (17) comporte une section de bouchon (28) avec un diamètre extérieur D (25) et l'écrou de raccord (14) comporte une section avec un diamètre intérieur d (24), le diamètre extérieur D (25) étant constitué plus petit que le diamètre intérieur d (24) ou le diamètre extérieur D (25) étant constitué égal au diamètre intérieur d (24).

13. Système de contrôle de pression de pneu (6) selon au moins l'une quelconque des revendications 1 à 12, **caractérisé en ce que** le bouchon de valve (17) et l'écrou de raccord (14) peuvent être reliés avec un ajustement avec jeu ou avec un ajustement serré ou avec un raccord à cran (22) de telle sorte que le bouchon de valve (17) et l'écrou de raccord (14) forment une unité de montage, notamment automaintenue.

14. Système de contrôle de pression de pneu (6) selon au moins l'une quelconque des revendications 1 à 13, **caractérisé en ce que** la section de bouchon (28) et la section de couplage (19) peuvent être découplées l'une de l'autre après dépassement d'un couple de vissage prédéfini, notamment de 2,8-4,2 Nm.

15. Système de contrôle de pression de pneu (6) selon au moins l'une des revendications 1 à 14, **caractérisé en ce que** le bouchon de valve (17) est constituée en matière plastique, notamment au moyen d'un procédé de moulage par injection.
